# EUROPÄISCHE PATENTSCHRIFT

(11) **EP 3 895 283 B1**
(45) Veröffentlichungstag und Bekanntmachung des Hinweises auf die Patenterteilung: **27.03.2024**
(21) Anmeldenummer: 19828609.8
(22) Anmeldetag: 11.12.2019
(51) Int. Cl.: H02K 15/00, H02K 3/50, H02K 3/12, H02K 15/06, H02K 15/085

(54) **STATOR, ELEKTRISCHE MASCHINE UND VERFAHREN ZUR HERSTELLUNG**
STATOR, ELECTRIC MACHINE, AND MANUFACTURING PROCESS
STATOR, MACHINE ÉLECTRIQUE ET PROCÉDÉ DE FABRICATION

(30) Priorität: 12.12.2018 DE 102018131960
(43) Veröffentlichungstag der Anmeldung: 20.10.2021
(73) Patentinhaber: Jheeco E-Drive AG, 9492 Eschen (LI)
(72) Erfinder: STÖCK, Martin, 9465 Salez (CH); BUOL, Roland, 7323 Wangs (CH); HAAS, Raphael, 6800 Feldkirch (AT)
(74) Vertreter: Grünecker Patent- und Rechtsanwälte PartG mbB
(86) Internationale Anmeldenummer: PCT/EP2019/084756
(87) Internationale Veröffentlichungsnummer: WO 2020/120629

(56) Entgegenhaltungen:
- JP-A- 2010 239 798
- US-A1- 2003 173 841
- US-A1- 2016 276 887
- US-A1- 2017 025 913

## Beschreibung

Die Erfindung betrifft einen Stator für eine elektrische Maschine. Des Weiteren betrifft die Erfindung eine elektrische Maschine und ein Verfahren zur Herstellung.

Zusammengesetzte Wicklungen sind aus Segmentleitern bzw. Stableitern aufgebaute Wicklungen. Die Segmentleiter werden unmittelbar, durch aufeinander Zubiegen, oder mittelbar über Verschaltungsstege zu Halbwicklungen verbunden.

Aus dem Stand der Technik ist bekannt, Segmentleiter über separate Kupferverbinder bzw. Verschaltungsstege zu Halbwicklungen zu verbinden. Die exakte Positionierung der Verschaltungsstege und der Stableiter gegenüber einander zur darauffolgenden elektrischen Kontaktierung bzw. Verbindung, ist schwierig. In der Druckschrift US 9 118 224 B2 ist die relative Positionierung und elektrische Kontaktierung durch Schraub- bzw. Stiftelemente gelöst. Die Verschaltungsstege müssen dazu einzeln aufgelegt werden. Die Montage ist somit jedoch sehr aufwendig.

Alternativ ist bekannt, die Segmentleiter unmittelbar, d.h. ohne Zwischenschaltung von Verschaltungsstegen, miteinander zu verbinden. Die Segmentleiter werden hierzu mithilfe von Positionierwerkzeugen in Anlage miteinander gebracht und direkt verschweißt. Die Druckschrift DE 11 2015 001 994 A5 zeigt beispielsweise einen Wickelkopf für formverpresste Drahtlitzen bzw. Formlitzen, wobei die Formlitzen zur Verbindung aufeinander zugebogen und miteinander verschweißt werden. Jedoch weist der resultierende Wickelkopf eine große Bauhöhe auf.

Aus der US 2017/025913 A1 ist ein weiterer Stator mit Stableitern und Verschaltungsstegen bekannt.

Es ist Aufgabe der Erfindung einen Stator anzugeben, der eine Verschaltung von Stableitern auf vereinfachte und kostengünstige Weise zur Bereitstellung von zusammengesetzten Wicklungen ermöglicht, eine optimierte Prozesssicherheit zur sicheren elektrischen Verbindung bereitstellt sowie einen reduzierten Bauraum aufweist. Darüber hinaus ist es Aufgabe der Erfindung eine elektrische Maschine und ein Verfahren zur Herstellung anzugeben.

Diese Aufgabe wird in Hinblick auf den Stator durch den Anspruch 1 gelöst, mit Blick auf die elektrische Maschine durch den Anspruch 7 und mit Blick auf das Herstellungsverfahren durch den Anspruch 8. Bevorzugte Ausführungsformen sind in den abhängigen Ansprüchen angegeben.

Gemäß der vorliegenden Erfindung ist ein Stator für eine elektrische Maschine vorgesehen, mit einer Vielzahl von Stableitern, die um eine Rotationsachse des Stators radial verteilt und jeweils voneinander beabstandet angeordnet sind, sodass sich die Stableiter in Längsrichtung der Rotationsachse erstrecken, und mit wenigstens einer Isolationsscheibe, die in einem Stirnbereich des Stators angeordnet ist. Die Isolationsscheibe, insbesondere ringförmig ausgebildete Isolationsscheibe, weist eine Vielzahl von Verschaltungsstegen auf, wobei jeweils ein Verschaltungssteg zwei Stableitern zur Ausbildung einer elektrischen Verbindung zugeordnet ist. An längsseitigen Enden der Stableiter sind jeweils eine Stableiter-Kontaktfläche und an Enden der Verschaltungsstege jeweils Verschaltungssteg-Kontaktflächen ausgebildet, wobei die Stableiter-Kontaktflächen und die Verschaltungssteg-Kontaktflächen jeweils korrespondierend zueinander ausgebildet sind, sodass ein Flächenkontakt bereitstellbar ist. Die Verschaltungsstege ragen wenigstens entlang der Verschaltungssteg-Kontaktflächen in radialer Richtung aus der Isolationsscheibe heraus, sodass mehrere Verschaltungssteg-Kontaktflächen, vorzugsweise sämtliche Verschaltungssteg-Kontaktflächen, mit den jeweils zugeordneten Stableiter-Kontaktflächen gleichzeitig kontaktierbar sind.

Die Erfindung basiert auf dem Grundgedanken, anhand der Isolationsscheiben mit den Verschaltungsstegen eine vereinfachte Positionierung und Kontaktierung der Stableiter zur Ausbildung von zusammengesetzten Wicklungen bereitzustellen. Insbesondere soll dies auch durch eine vorteilhafte Positionierung und Ausgestaltung der Kontaktflächen der Stableiter sowie der Verschaltungsstege sichergestellt werden.

Darüber hinaus soll durch den Einsatz der Isolationsscheiben mit den Verschaltungsstegen eine Einsparung von Bauraum bereitgestellt werden, vorzugsweise sowohl in Umfangsrichtung als auch in Längsrichtung der Rotationsachse des Stators.

Der Stator kann insbesondere für eine elektrische Maschine, also eine Synchronmaschine oder eine Asynchronmaschine, vorgesehen sein.

Ferner können unter Stableitern im Sinne der Erfindung insbesondere elektrische Leiter zur Ausbildung von zusammengesetzten Wicklungen verstanden werden. Demnach können Stableiter einteilig (Massivleiter) oder mehrteilig (Drahtlitzen) sein und beispielsweise in Form von Haarnadeln (Hairpins) oder I-förmig (I-Pins) ausgebildet sein. Stableiter können insbesondere auch als formverpresste Drahtlitzen ausgestaltet sein.

Des Weiteren ist die wenigstens eine Isolationsscheibe in einem Stirnbereich des Stators angeordnet. Unter den Stirnbereichen sind insbesondere die einander gegenüberliegenden, längsseitigen Enden der Stableiter zu verstehen. An den längsseitigen Enden bzw. in dem Bereich entlang der längsseitigen Enden der Stableiter können jeweils eine oder mehrere Isolationsscheiben vorgesehen sein.

Vorzugsweise sind mehrere Isolationsscheiben mit Verschaltungsstegen in den jeweiligen Stirnbereichen des Stators zur Ausbildung von Ebenen bzw. Verschaltungsebenen angeordnet, um mittels der jeweiligen Verschaltungsstege alle Stableiter zweckmäßig elektrisch zu verschalten, insbesondere zur Bereitstellung von zusammengesetzten Wicklungen.

Die wenigstens eine Isolationsscheibe ist bevorzugter Weise ringförmig ausgebildet und weist eine Vielzahl von Verschaltungsstegen auf, wobei jeweils ein Verschaltungssteg zwei Stableitern zur Ausbildung einer elektrischen Verbindung zugeordnet ist. Die Zuordnung und Anordnung der Verschaltungsstege gegenüber den Stableitern kann in modularer Weise erfolgen.

An längsseitigen Enden der Stableiter sind jeweils eine Stableiter-Kontaktfläche und an Enden der Verschaltungsstege jeweils Verschaltungssteg-Kontaktflächen ausgebildet, wobei die Stableiter-Kontaktflächen und die Verschaltungssteg-Kontaktflächen jeweils korrespondierend zueinander ausgebildet sind, sodass ein Flächenkontakt bereitstellbar ist. Bevorzugter Weise können die korrespondierenden Kontaktflächen derart ausgebildet sein, dass die Kontaktflächen beim Zusammensetzen des Stators miteinander in Anschlag kommen, insbesondere im Zuge einer Rotationsbewegung zur Vorpositionierung.

Des Weiteren ragen die Verschaltungsstege wenigstens entlang der Verschaltungssteg-Kontaktflächen in radialer Richtung aus der Isolationsscheibe heraus, sodass sämtliche Verschaltungssteg-Kontaktflächen mit den jeweils zugeordneten Stableiter-Kontaktflächen gleichzeitig, also mit einer einzelnen (Rotations-)Bewegung der jeweiligen Isolationsscheibe, kontaktierbar sind, insbesondere zur Ausbildung wenigstens einer zusammengesetzten Wicklung des Stators. Die Isolationsscheibe kann als eine Ringscheibe ausgebildet sein, wobei die Verschaltungsstege über einen Innendurchmesser der Isolationsscheibe hinausragen, um eine elektrische Kontaktierung mit den Stableitern zu ermöglichen.

Nach einer besonders bevorzugten Ausführungsform sind die Stableiter-Kontaktflächen und die jeweils zugeordneten Verschaltungssteg-Kontaktflächen durch eine Rotation der Isolationsscheibe entlang der Rotationsachse des Stators miteinander kontaktierbar.

Vorzugsweise kann die Isolationsscheibe Greifnuten und/oder Löcher oder dergleichen aufweisen zum Verdrehen/Rotieren und Halten der Isolationsscheibe mittels eines Werkzeuges, insbesondere zum Halten eines vorgespannten Flächenkontakts zwischen Verschaltungsstegen und Segmentleitern.

Anhand der Kontaktierung, vorzugsweise vorgespannten Kontaktierung, der Stableiter-Kontaktflächen und der Verschaltungssteg-Kontaktflächen ist eine sichere Vorpositionierung und Kontaktierung der einander zugeordneten Stableiter und Verschaltungsstege bereitstellbar, insbesondere bevor eine kraft- und/oder form- und/oder stoffschlüssige Verbindung erfolgt.

In einer Ausführungsform weist die wenigstens eine Isolationsscheibe eine Mehrzahl von Nuten auf, zur Aufnahme der Verschaltungsstege, oder die Mehrzahl von Verschaltungsstegen ist in der Isolationsscheibe eingegossen. Somit ist eine einfache Anordnung der Verschaltungsstege entlang der Isolationsscheibe sowie eine vereinfachte Vorpositionierung gegenüber den Stableitern verfügbar. Des Weiteren kann eine wenigstens abschnittsweise elektrische Isolation der Verschaltungsstege bereitgestellt werden.

In einer weiteren Ausführungsform weist die Isolationsscheibe ein Harz oder Polymer auf, insbesondere ein gießbares oder spritzbares Harz oder Polymer, zur Herstellung der Isolationsscheibe in einem Gießverfahren.

Es ist eine einfache und sichere Positionierung der Verschaltungsstege entlang der Isolationsscheibe möglich, insbesondere zur zweckmäßigen Kontaktierung mit den Stableitern. Des Weiteren kann anhand des gießbaren oder spritzbaren Harzes oder Polymers eine vereinfachte elektrische Isolierung der Verschaltungsstege, zumindest abschnittsweise, erfolgen.

Erfindungsgemäß bilden die Verschaltungsstege und die Stableiter eine federnde Verbindung aus, zur Bereitstellung eines vorgespannten Flächenkontaktes zwischen den einander zugeordneten Stableiter-Kontaktflächen und Verschaltungssteg-Kontaktflächen.

Anhand des vorgespannten Flächenkontakts ist eine anschließende elektrische Kontaktierung zwischen den Stableitern und den Verschaltungsstegen bereitstellbar.

Gemäß einer Ausführungsform bilden die Verschaltungsstege in Kontakt mit den Stableitern entlang der Verschaltungssteg-Kontaktflächen und der Stableiter-Kontaktflächen jeweils einen Nullspalt aus, sodass die Verschaltungsstege mit den zugeordneten Stableitern kraftschlüssig und/oder formschlüssig und /oder stoffschlüssig verbindbar sind, insbesondere mittels eines Strahlschweißverfahrens, vorzugsweise eines Laser- oder Elektronenschweißverfahrens, eines Widerstandschweißverfahrens, eines Ultraschallschweißverfahrens oder eines Reibschweißverfahrens bzw.

Rührreibschweißen miteinander verschweißbar sind. Auch ein Lichtbogenschweißen ist möglich.

Indem der vorgespannte Flächenkontakt zwischen der Verschaltungsstegen und den Stableitern bereitgestellt wird, ist eine qualitativ hochwertige elektrische Verbindung erzeugbar. Insbesondere kann die kraft- und/oder form- und/oder stoffschlüssige Verbindung zwischen den Verschaltungsstegen und den Stableitern anhand des vorgespannten Flächenkontaktes mittels eines Schweißverfahrens hergestellt werden.

Unter Nullspalt ist insbesondere ein Spalt zu verstehen, der derart beschaffen ist, dass zumindest bereichsweise ein Anschlag zwischen den Kontaktflächen von Verschaltungssteg bzw. Stableiter vorhanden ist und/oder ein Strahlschweißverfahren möglich ist.

Erfindungsgemäß sind die längsseitigen Enden der Verschaltungsstege keilförmig - in axialer Draufsicht gesehen - ausgebildet oder sind die Enden der Verschaltungsstege, insbesondere die Kontaktflächen der Verschaltungsstege, abgewinkelt ausgebildet. Abgewinkelt bedeutet, dass die Kontaktfläche des Verschaltungssteges mit der Tangentialen eines Kreises lotrecht zur Statorachse und um die Statorachse mit einem Radius derart, dass er durch die Kontaktfläche des Verschaltungssteges geht, einen Winkel von ungleich einem geradzahlig Vielfachen von 90° einschließt.

Bevorzugter Weise sind die längsseitigen Enden der Stableiter, insbesondere im Bereich der Kontaktflächen, mit einer zu den Verschaltungsstegen korrespondierende Form ausgebildet.

Anhand zueinander korrespondierend ausgestalteter Längsenden der Stableiter und der Verschaltungsstege ist ein vorgespannter Flächenkontakt im Zuge einer Vorpositionierung, vorzugsweise einer rotatorischen Verdrehung zur vorgespannten Kontaktierung, bereitstellbar.

In einer weiteren bevorzugten Ausführungsform sind die Stableiter auf bzw. über die Höhe der Stableiter-Kontaktflächen im Querschnitt jeweils punktsymmetrisch, insbesondere in Form eines Parallelogramms, ausgebildet, sodass über den Querschnitt der Stableiter identische Strompfadlängen vorliegen.

Somit können gleichlange Strompfade gewährleistet werden, sodass im Zuge z.B. eines Widerstandschweißen oder eines Ultraschallschweißens eine gleichmäßige kraft- und/oder form- und/oder stoffschlüssige Verbindung entlang der gesamten Erstreckung der Kontaktflächen der Stableiter und der Verschaltungsstege erzeugbar ist.

In einem nebengeordneten Aspekt der Erfindung ist eine elektrische Maschine mit einem Stator gemäß der vorliegenden Erfindung vorgesehen. Vorzugsweise kann die elektrische Maschine als ein Elektromotor, als ein Synchronmotor oder als ein Asynchronmotor, als ein Generator oder dergleichen ausbildbar sein.

In einem weiteren nebengeordneten Aspekt der Erfindung ist ein Verfahren zur Herstellung eines Stators oder einer elektrischen Maschine gemäß der Erfindung vorgesehen, die folgenden Schritte aufweisend:
- konzentrisches Ausrichten der Isolationsscheibe gegenüber der Vielzahl von um die Rotationsachse radial verteilt und jeweils voneinander beabstandet angeordneten Stableitern;
- Aufsetzen der Isolationsscheibe an einem stirnseitigen Ende des Stators, sodass jeweils eine Stableiter-Kontaktfläche und eine Verschaltungssteg-Kontaktfläche einander entgegengerichtet sind;
- Rotieren der Isolationsscheibe um die Rotationsachse, sodass ein vorgespannter Flächenkontakt zwischen den Stableiter-Kontaktflächen und den Verschaltungssteg-Kontaktflächen erzeugt wird.

Eine Vorpositionierung der Verschaltungsstege gegenüber den Stableitern ist auf einfache Weise durch ein Aufsetzen und Rotieren der wenigstens einen Isolationsscheibe mit den Verschaltungsstegen möglich. Es ist ein vorgespannter Flächenkontakt bereitstellbar, als vorteilhafter Ausgangszustand für z.B. ein Verschweißen zur elektrischen Verbindung der Kontaktflächen. In eine bevorzugten Ausführungsform werden die einander zugeordneten Stableiter und Verschaltungsstege entlang der jeweils miteinander in Kontakt stehenden Stableiter-Kontaktflächen und Verschaltungssteg-Kontaktflächen kraftschlüssig und/oder formschlüssig und/oder stoffschlüssig miteinander verbunden, insbesondere verschweißt.

Insbesondere kann die elektrische Verbindung für sämtliche Stableiter und Verschaltungsstege einer Verschaltungsebene bzw. einer Isolationsscheibe in einem zusammenhängenden Prozess erfolgen. Die einzelnen in Flächenkontakt stehenden Stableiter-Kontaktflächen und Verschaltungssteg-Kontaktflächen können unmittelbar nacheinander oder gleichzeitig miteinander kraft- und/oder form- und/oder stoffschlüssig miteinander verbunden werden, insbesondere verschweißt werden. Der vorgespannte Flächenkontakt zwischen den Stableitern und den Verschaltungsstegen stellt einen vorteilhaften Ausgangszustand dar, um die elektrische Verbindung auf einfache und sichere Weise herzustellen.

Nach einer weiteren bevorzugten Ausführungsform wird ein Deckelteil auf die Isolationsscheibe aufgesetzt.

Das Deckelteil kann als ein Ring ausgebildet sein oder als ein Abschlussdeckel, insbesondere an den längsseitigen Enden des Stators. Somit wird ein längsseitiger Abschluss der zusammengesetzten Wicklungen des Stators bereitgestellt.

Gemäß einer bevorzugten Ausführungsform werden die Verschaltungsstege mit den zugeordneten Stableitern nach Positionierung des Deckelteils kraftschlüssig und/oder formschlüssig und/oder stoffschlüssig verbunden.

Insbesondere kann das Deckelteil ein Material aufweisen, welches z.B. ein Strahlschweißen ermöglicht. In diesem Sinne kann das Deckelteil unempfindlich bzw. insensitiv für das Verbindungsverfahren zur elektrischen Verbindung der Stableiter mit den Verschaltungsstegen sein.

Es ist es möglich, dass das Deckelteil ein transparentes Material aufweist, so dass ein Schweißstrahl das Deckelteil ohne wesentliche Energieverluste passieren kann und die Energie in dem jeweils vorgesehenen Schweißspalt, zwischen Verschaltungssteg-Kontaktfläche und Stableiter-Kontaktfläche, zweckmäßig absorbiert werden kann. In diesem Sinne kann das Deckelteil in geeigneter Form für ein Laserdurchstrahlschweißen ausgebildet sein.

Im Folgenden wird die Erfindung mit Bezug auf die beigefügten Zeichnungen anhand von mehreren Ausführungsbeispielen im Detail erläutert.

Es zeigen schematisch:
- Fig. 1: perspektivische Explosionsdarstellung eines erfindungsgemäßen Stators;
- Fig. 2: perspektivische Darstellung der zusammengesetzten Wicklungen eines erfindungsgemäßen Stators;
- Fig. 3: Darstellung einer einzelnen Phase der zusammengesetzten Wicklungen gemäß Fig. 2;
- Fig. 4a-e: perspektivische Darstellungen von Isolationsscheiben mit zugehörigen Verschaltungsstegen;
- Fig. 5a-b: perspektivische Darstellung gestapelter Isolationsscheiben mit eingelegten Verschaltungsstegen;
- Fig. 6a-b: perspektivische Darstellung der Isolationsscheiben gemäß Fig. 5a-b mit Deckelteil und Isolationsstern;
- Fig. 7a-b: Darstellung der Vorpositionierung einer Isolationsscheibe;
- Fig. 8a-b: Darstellung der Vorpositionierung für eine L-förmige Geometrie der Verschaltungsstege; Die Figuren 8a,b entsprechen nicht der Erfindung;
- Fig. 9a-b: Darstellung der Vorpositionierung für eine keilförmige Geometrie der Verschaltungsstege;
- Fig. 10: Darstellung einer beispielhaften Formlitze mit parallelogrammförmiger Verschweißung zum Ausgleich eines Positionierfehlers;
- Fig. 11: Darstellung des Verschweißen der Köpfe von Formlitzen mit Strompfaden ungleicher Länge;
- Fig. 12: Darstellung des Verschweißen der Köpfe von Formlitzen mit gleichlangen Strompfaden;
- Fig. 13: perspektivische Darstellung von Fluideinlässen und Fluidauslässen für eine Kühlfluidströmung eines Stators;
- Fig. 14: Darstellung einer Kühlfluidströmung innerhalb des Stators in einer Querschnittsansicht; und
- Fig. 15: Darstellung der Kühlfluidströmung in einer Isolationsscheibe
- Fig. 16a-b: Darstellung der Vorpositionierung für eine abgewinkelte Geometrie der Verschaltungsstege
- Fig. 16c: einen Verschaltungssteg mit abgewinkelten Enden analog Fig. 16a-b
- Fig. 17a-19b: drei verschiedene Varianten eines Montageprozesses zum Herstellen des Flächenkontakts durch axiales Aufsetzen der Verschaltungsstege, welche nicht der Erfindung entsprechen;
- Fig. 20a-22b: drei verschiedene Varianten eines Montageprozesses zum Herstellen des Flächenkontakts durch laterale Bewegung der Verschaltungsstege, welche nicht der Erfindung entsprechen.
- Fig. 23: zeigt eine Haltemöglichkeit von Verschaltungsstegen durch Halteelemente
- Fig. 24: zeigt eine Herstellmöglichkeit von Haltelementen

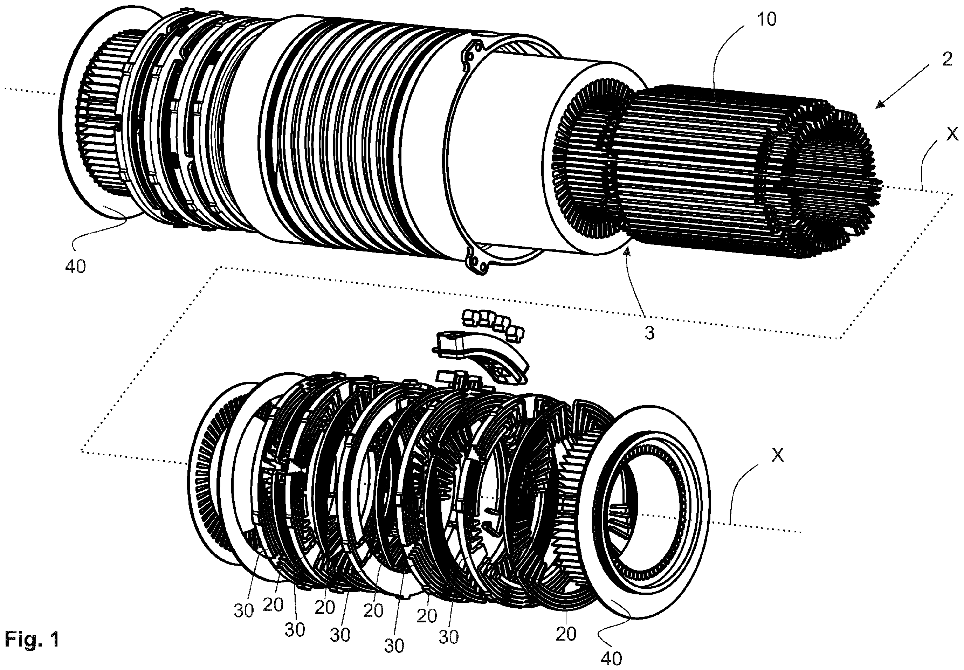

In Fig. 1 ist eine perspektivische Explosionsdarstellung eines erfindungsgemäßen Stators 1 gezeigt. Demnach sind die Komponenten des Stators 1 entlang einer Rotationsachse X konzentrisch angeordnet.

Der Stator 1 ist mit radial verteilten und voneinander beabstandeten Stableitern 10 ausgebildet, die sich in Längsrichtung der Rotationsachse X erstrecken. Längsseitige Enden der Stableiter 10 stellen einander gegenüberliegende Stirnbereiche 2; 3 des Stators 1 dar bzw. bilden diese aus.

Des Weiteren weist der Stator 1 mehrere Isolationsscheiben 30 mit jeweils mehreren Verschaltungsstegen 20 auf.

An den Stirnbereichen 2; 3 des Stators 1 ist jeweils ein ringförmiges Deckelteil 40 angeordnet. Die Deckelteile 40 stellen eine Einfassung der der Isolationsscheiben 30 und somit die beidseitigen Abschlüsse des Stators 1 dar.

Die Deckelteile 40 weisen jeweils Trennstege auf, die sich insbesondere in Längsrichtung der Rotationsachse X zwischen die Stableiter 10 bzw. die Verschaltungsstege 20 erstrecken können, insbesondere zur jeweiligen Beabstandung bzw. Isolation.

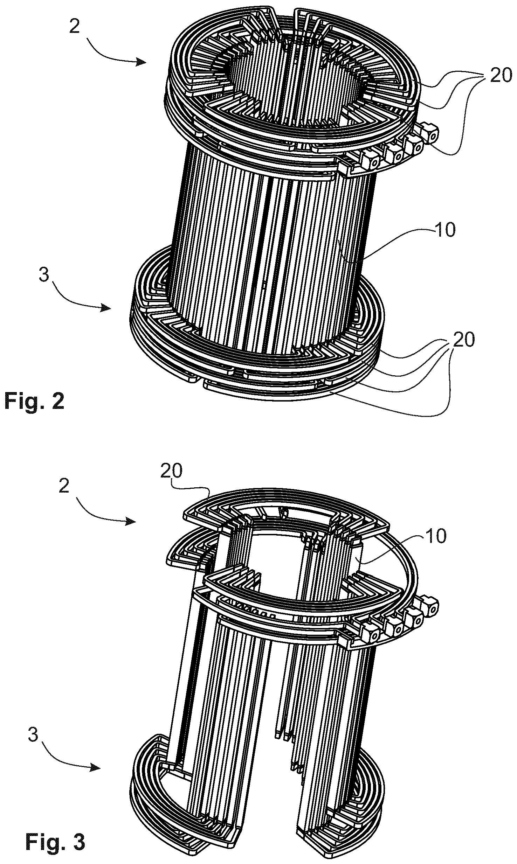

In Fig. 2 ist eine perspektivische Darstellung der zusammengesetzten Wicklungen eines erfindungsgemäßen Stators 1 dargestellt.

In den Stirnbereichen des Stators 2; 3 bzw. an den längsseitigen Enden der Stableiter 10 sind jeweils mehrere Anordnungen von Verschaltungsstegen 20 vorgesehen. So bilden die Isolationsscheiben 30 mit den Verschaltungsstegen 20 unterschiedliche Verschaltungsebenen aus, um eine zweckmäßige Verschaltung der Stableiter 10 zur Bereitstellung von zusammengesetzten Wicklungen zu erzielen.

Vorzugsweise ist an dem oberen Stirnbereich 2 neben den einzelnen Verschaltungsebenen ferner auch eine Anschlussebene mit Phasenanschlüssen zur Strom- bzw. Spannungsversorgung gezeigt, insbesondere zur Herausführung der Wicklungsphase und/oder zur Zusammenführung der Wicklungsphasen zu einem Sternpunkt.

Fig. 3 zeigt eine Darstellung einer einzelnen Phase der zusammengesetzten Wicklungen gemäß Fig. 2.

Insbesondere ist ersichtlich, dass die Verschaltungsstege 20 jeweils C-förmig ausgebildet sind. So können die Verschaltungsstege 20 ineinander verschachtelt angeordnet sein, um eine Verschaltungssteg-Gruppe auszubilden.

Nach Fig. 3 verläuft eine Phase entlang der Stableiter 10 zwischen unterschiedlichen Ebene von Verschaltungsstegen 20. So ist eine Verschachtelung der Verschaltungsstege 20 mit den elektrisch verbundenen Stableitern 10 zur Ausbildung unterschiedlicher Phasen möglich.

Gemäß Fig. 2 und 3 ist durch die Anordnung der Verschaltungsstege 20 in unterschiedlichen Ebenen eine platzsparende Anordnung bzw. Verschaltung der zusammengesetzten Wicklungen verfügbar.

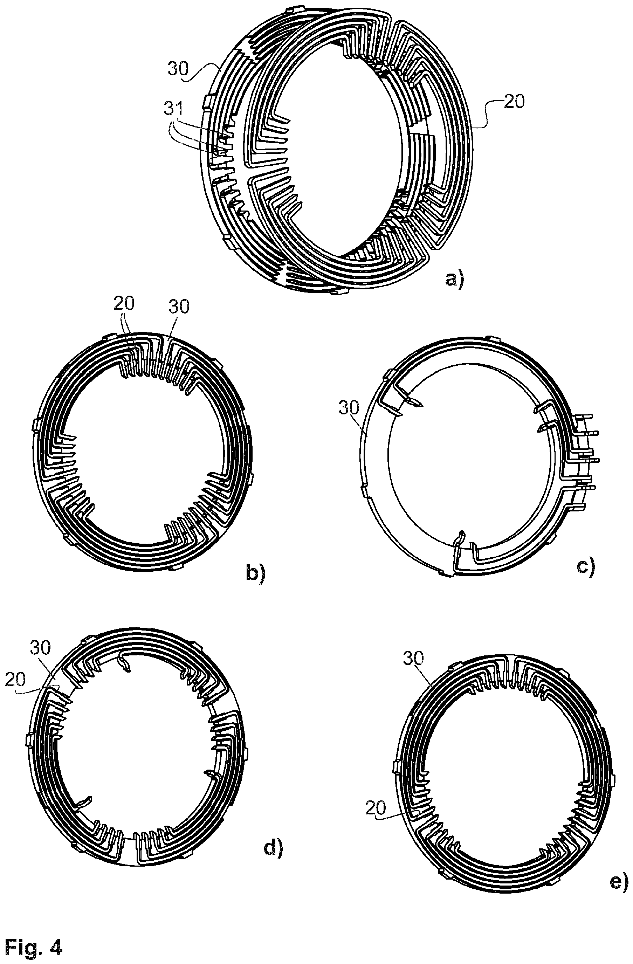

In den Fig. 4a-e sind perspektivische Darstellungen von Isolationsscheiben mit zugehörigen Verschaltungsstegen gezeigt.

Aus den Fig. 4a-e wird deutlich, dass sich die Ausbildung der Isolationsscheiben 30 mit den Verschaltungsstegen 20 entlang der einzelnen Verschaltungsebenen unterscheiden können, um eine zweckmäßige Verschaltung der Stableiter 10 und somit eine zweckmäßige Ausbildung der zusammengesetzten Wicklungen zu ermöglichen.

Des Weiteren ist, insbesondere gemäß Fig. 4a, die Ausbildung der Isolationsscheibe 30 mit Nuten 31 zur Aufnahme der Verschaltungsstege 20 vorgesehen. Die Verschaltungsstege 20 sind in die Nuten 31 der Isolationsscheibe 30 einlegebar bzw. in diesen aufnehmbar. Somit können eine gezielte Vorpositionierung sowie eine abschnittsweise elektrische Isolation der Verschaltungsstege 20 anhand der jeweiligen Isolationsscheibe 30 bereitgestellt werden. Des Weiteren ist in Fig. 4c die Ausbildung der Verschaltungsstege 20 zur Bereitstellung einer Anschlussebene gezeigt. Auf diese Weise sind die Stableiter 10 bzw. Verschaltungsstege 20 zweckmäßig mit Strom bzw. Spannung beaufschlagbar.

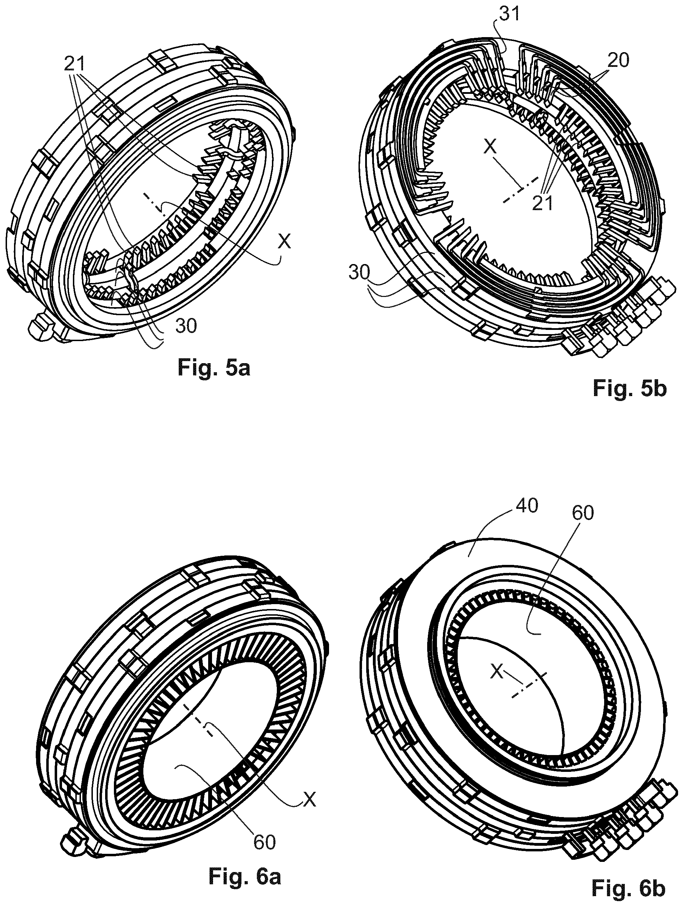

In Fig. 5a-b ist perspektivische Darstellung gestapelter Isolationsscheiben mit eingelegten Verschaltungsstegen 20 gezeigt.

Die unterschiedlichen Isolationsscheiben 30 mit den jeweiligen Verschaltungsstegen 20 sind unmittelbar aufeinander angeordnet. Die Enden der Verschaltungsstege 20 ragen in radialer Richtung aus den Isolationsscheiben 30 jeweils heraus, um eine zweckmäßige elektrische Kontaktierung zu ermöglichen. Insbesondere ragen die Verschaltungsstege 20 über einen Innendurchmesser der ringförmigen Isolationsscheiben 30 hinaus, und somit in Richtung der Rotationsachse X des Stators 1.

Anhand der versetzten Anordnung der Enden der Verschaltungsstege 20 ist eine vorteilhafte Verschaltung und Kontaktierung mit den Stableitern 10 möglich.

In Fig. 6a-b ist eine perspektivische Darstellung der Isolationsscheiben 30 gemäß Fig. 5a-b mit Deckelteil 40 und Isolationsstern 60 gezeigt.

Das Deckelteil 40 schließt die Anordnung der Isolationsscheiben 30 längsseitig ab. Der Isolationsstern 60 ist konzentrisch zu den Isolationsscheiben 30 und an dem Innendurchmesser der ringförmigen Isolationsscheiben 30 angeordnet. Somit schließt der Isolationsstern 60 die Anordnung der Isolationsscheiben 30 mit den Verschaltungsstegen 20 in radialer Richtung ab, insbesondere zur Abgrenzung gegenüber eines aufzunehmenden bzw. anzuordnenden Rotors zur Ausbildung einer elektrischen Maschine. Deckelteil 40 und Isolationsstern 60 sind einteilig ausgebildet.

Der Isolationsstern 60 ist mit einer umlaufenden Fläche ausgebildet, an deren Außenumfang sternförmig abgehende Trennwände angeordnet sind. Die Trennwände erstrecken sich in Längsrichtung der umlaufenden Fläche des Isolationssterns 60. Anhand des Isolationssterns 60 ist somit eine zweckmäßige elektrische Isolation der Stableiter 10 untereinander sowie eine Kontaktierung der Stableiter 10 mit den Verschaltungsstegen 20 entlang der Isolationsscheiben 30 möglich.

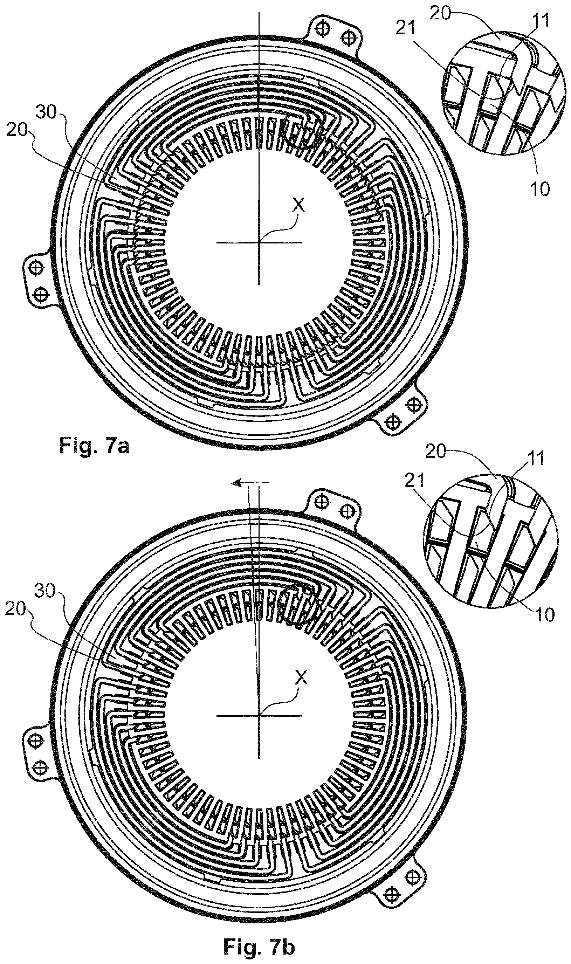

In den Fig. 7a-b ist eine Darstellung der Vorpositionierung einer Isolationsscheibe 30 gezeigt.

Fig. 7a stellt den Versatz zwischen den Verschaltungsstegen 20 und den Stableitern 10 nach dem konzentrischen Aufsetzen der Isolationsscheibe 30 dar. Stableiter-Kontaktflächen 11 und Verschaltungssteg-Kontaktflächen 21 sind noch voneinander getrennt angeordnet. Gemäß Fig. 7a können die Kontaktflächen 11; 21 der Stableiter 10 und der Verschaltungsstege 20 korrespondierend zueinander ausgebildet sein, wobei Enden der Verschaltungsstege 20 und Kopfenden der Stableiter 10 jeweils keilförmig ausgebildet sind. Die Keilform bezieht sich hier auf eine Sicht senkrecht zur Längsachse X des Stators.

Gemäß Fig. 7b wird ein vorgespannter Flächenkontakt zwischen der Verschaltungssteg-Kontaktflächen 21 und den Stableiter-Kontaktflächen 11 im Zuge einer Rotation der Isolationsscheibe 30 zur Vorpositionierung der Verschaltungsstege 20 hergestellt. Somit ist eine sichere Kontaktierung der Stableiter 10 mit den Verschaltungsstegen 20 bereitstellbar. In diesem kontaktierten Zustand kann eine einfache und sichere Verbindung der Stableiter 10 mit den Verschaltungsstegen 20 erzeugt werden, vorzugsweise im Zuge eines Schweißverfahrens wie z.B. eines Strahlschweißens, eines Widerstandsschweißens oder eines Ultraschallschweißens. Durch die Keilform bleibt insbesondere eine axiale Zugänglichkeit erhalten, so dass mit einem Schweißstrahl senkrecht zur Längsachse des Stators X geschweißt werden kann.

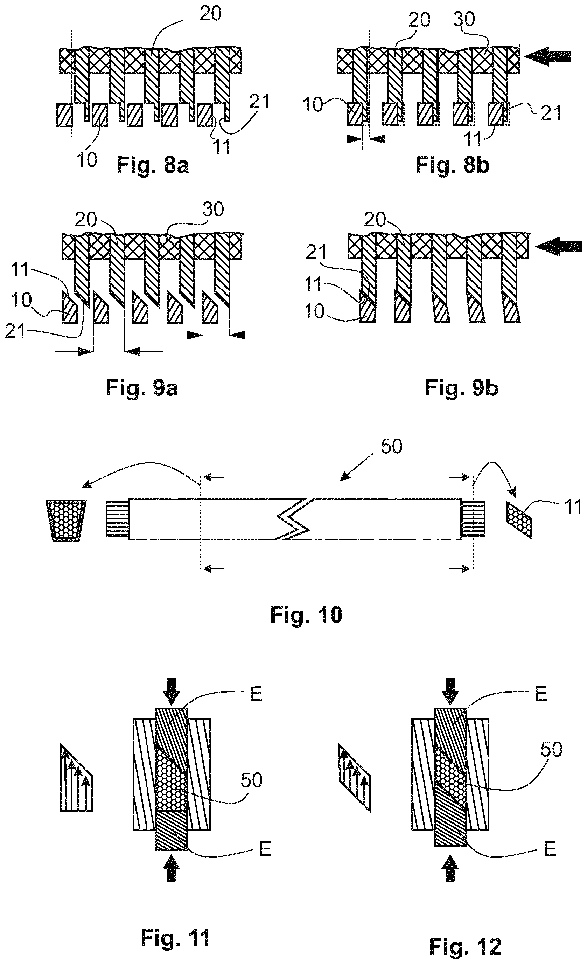

Fig. 8a-b zeigen eine nicht erfindungsgemäße Darstellung der Vorpositionierung für eine L-förmige Geometrie der Verschaltungsstege 20 in einer Draufsicht senkrecht zur Statorachse X.

Im Sinne der Fig. 7a-b erfolgt gemäß Fig. 8a-b eine Relativverschiebung zwischen den Verschaltungsstegen 20 und den Stableitern 10 um einen Kontakt im Zuge der Vorpositionierung bereitzustellen.

Die Stableiter 10 können rechteckig oder quadratisch bzw. mit einem rechteckigen oder quadratischen Querschnitt ausgebildet sein.

In den Fig. 9a-b ist eine Darstellung der Vorpositionierung für eine keilförmige bzw. keilförmig verlaufende Geometrie der Verschaltungsstege 20 gezeigt.

Um einen vorgespannten Flächenkontakt entlang der einander zugeordneten Stableiter-Kontaktflächen 11 und den Verschaltungssteg-Kontaktflächen 21 bereitzustellen erfolgt eine Relativverschiebung, in Form einer Rotation der Isolationsscheibe 30 mit den jeweils zugehörigen Verschaltungsstegen 20. Gemäß Fig. 9b kann hierbei auch eine Fehlpositionierung z.B. einzelner Stableiter 10 und/oder Verschaltungsstege 20 ausgleichbar sein.

In Fig. 10 ist eine Darstellung einer beispielhaften Formlitze 50 gezeigt.

Die Formlitze 50 besteht aus Einzeldrähten, die im Kopfbereich elektrisch miteinander durch Elektrodenwiderstandschweißen kontaktiert sind. Der Formlitzkopf ist gemäß Fig. 10 Parallelogramm-förmig widerstandsverschweißt. So kann ein Positionierfehler, wie in Fig. 9a-b dargestellt, umgangen bzw. kompensiert werden. Die übrige Formlitze kann eine andere Querschnittsform aufweisen wie hier dargestellt beispielsweise trapezförmig.

Fig. 11 zeigt eine Darstellung des Verschweißen der Köpfe von Formlitzen 50 mit Strompfaden ungleicher Länge durch Elektrodenköpfe E. Aufgrund der nicht identischen Kontaktflächen der Formlitzen 50, insbesondere eine abgeschrägten und einer rechtwinkligen Kontaktfläche, liegen Strompfade ungleicher Längenabmessungen vor. Dies führt im Zuge z.B. eines Widerstandschweißverfahrens zu qualitativ minderwertigen elektrischen Verbindungsstellen.

In Fig. 12 ist eine Darstellung des Widerstandsverschweißen der Köpfe von Formlitzen 50 mit gleichlangen Strompfaden durch Elektrodenköpfe E gezeigt. Nach Fig. 12 sind die Kontaktflächen für das Widerstandsschweißen jeweils parallel und schrägliegend, insbesondere punktsymmetrisch und zueinander korrespondierend, ausgebildet. Anhand identisch langer Strompfade können hochqualitative, zuverlässige Verschweißungen der Kontaktflächen, also aller Drähte der Formlitzen 50, erzeugt werden.

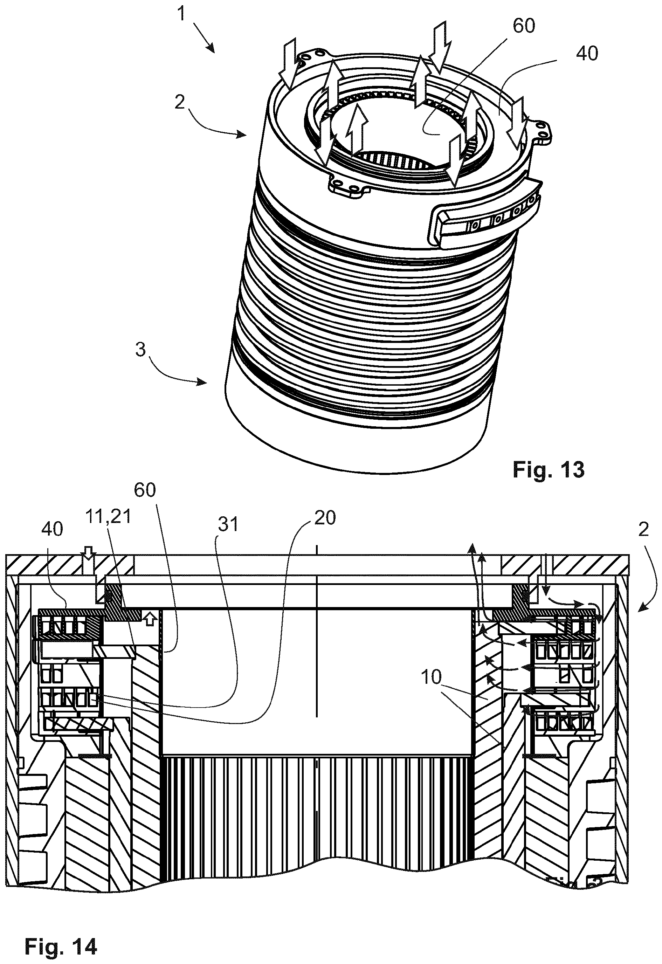

Fig. 13 zeigt eine perspektivische Darstellung von Fluideinlässen und Fluidauslässen für eine Kühlfluidströmung eines Stators 1.

Insbesondere kann vorgesehen sein, dass ein Kühlfluid an den Stirnbereichen 2; 3 des Stators 1 ein- und/oder austreten kann (vgl. Pfeilrichtungen in Fig. 13). Bevorzugter Weise kann der Wickelkopf bzw. können die zusammengesetzten Wicklungen des Stators 1 direkt mit dem Kühlfluid gekühlt werden. Ferner können die Isolationsscheiben 30 zur Durchströmung mit Kühlfluid ausgebildet sein.

Fig. 14 zeigt eine Darstellung einer Kühlfluidströmung innerhalb des Stators 1 in einer Querschnittsansicht.

Am Stirnbereich 2 des Stators 1 kann ein Kühlfluid in den Stator 1 einströmen und durch das Deckelteil 40 bis zu den Isolationsscheiben 30 gelangen (vgl. Pfeilrichtungen in Fig. 14). Ferner können die Isolationsscheiben 30 von dem Kühlfluid durchströmt werden, zur Kühlung der einzelnen Verschaltungsstege 20 in den Nuten 31 der Isolationsscheiben 30.

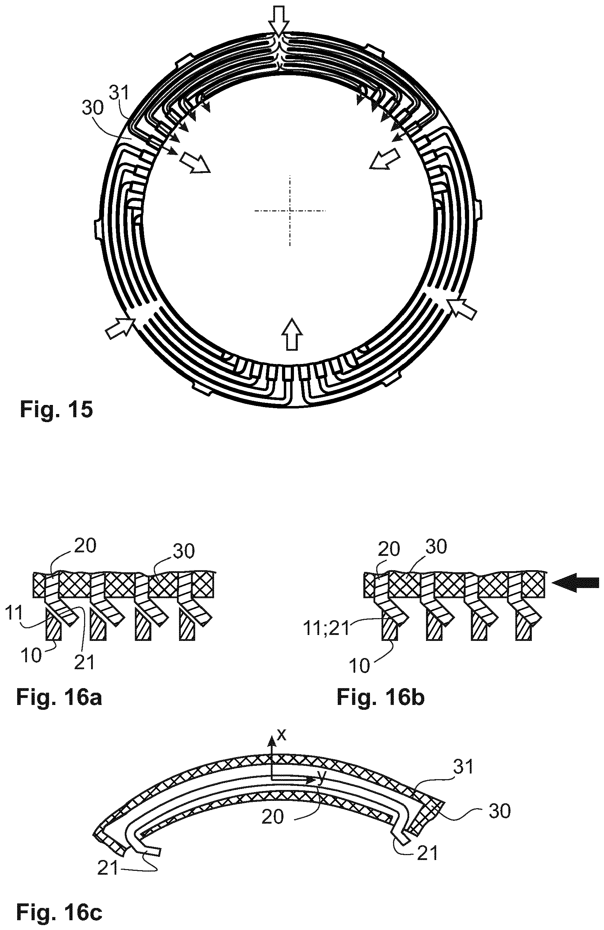

Gemäß Fig. 15 ist eine Darstellung der Kühlfluidströmung in einer Isolationsscheibe 30 veranschaulicht. Demnach kann ein Kühlfluid für jede Nut 31 bzw. darin aufgenommenen Verschaltungssteg 20 in eine Teilströmung aufgetrennt werden. So ist für alle Verschaltungsstege 20 ein gleicher Kühleffekt bereitstellbar. Es können lokale Temperaturerhöhungen in den Isolationsscheiben 30 vermieden werden.

Fig. 16a, 16 b zeigen vergleichbar zu Fig. 8,9 eine Darstellung der Vorpositionierung für Verschaltungsstege 20 mit abgewinkelten Endbereichen bzw. abgewinkelten Kontaktflächen 21 in einer Draufsicht senkrecht zur Statorachse X. Die abgewinkelten Bereich, welche die Kontaktflächen der Verschaltungsstege bilden, sind lang ausgebildet, insbesondere länger als die korrespondierenden Kontaktflächen 11 der Verschaltungsstege 10. Hierdurch können auch große Toleranzen ausgeglichen werden ohne die Güte der elektrischen Verbindung zu beeinflussen.

Fig. 16 c zeigt beispielhaft einen Verschaltungssteg 20 in einer Draufsicht, wie er in Fig. 16a-b Verwendung finden könnte. Der Verschaltungssteg 20 ist durch Ablängen und anschließendem Biegen eines Halbzeugs mit der Querschnittsform des Verschaltungssteges, beispielsweise einem Kupferstab, hergestellt. Insbesondere die abgewinkelten Kontaktflächen sind durch einen Biegeprozess hergestellt. Dadurch sinken die Anforderungen an den Ablängprozess, da der Ablängprozess keine funktionsrelevanten Flächen mehr bereitstellen muss. Der Stableiter 10 ist im Gegensatz etwa zu Fig. 16a,b mit Spiel in einer Nut 31 einer Isolationsscheibe 30 gehalten. Der Verschaltungssteg lässt sich somit relativ zur Isolationsscheibe lateral verschieben. Dadurch lassen sich Toleranzabhängigkeiten für eine Vorpositionierung durch Verdrehen und/oder axiales Aufsetzen und/oder laterale Bewegung aufbrechen. Das Spiel kann unabhängig von der gewählten Form der Verschaltungsstege 20 bzw. deren Kontaktflächen 21 eingesetzt oder nicht eingesetzt werden.

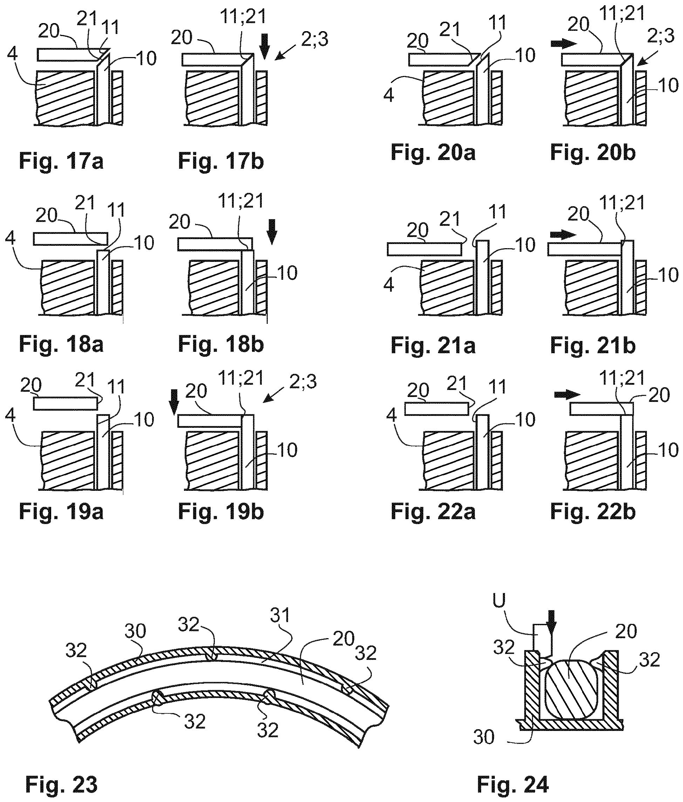

Fig. 17a-b, 18a-b, 19a-b zeigen jeweils schematisch einen Kontaktierungsprozess, der nicht der Erfindung entspricht, um Kontaktflächen 21, 11 von Verschaltungssteg 20 und Stableiter 10 in Anschlag zu bringen bzw. einen Nullspalt herzustellen in einer Schnittebene parallel zu und durch die Längsachse X des Stators. Hierzu erfolgt eine axiale Zubewegung des Verschaltungssteges 20 auf den im Statorblechpaket 4 fixierten Stableiter 10 bzw. auf eine Statorstirnseite 2;3. In den Fig. 17 haben Verschaltungssteg 20 und Stableiter 10 jeweils keilförmig ausgebildete Enden. In Figuren 18 und 19 haben Enden von Verschaltungssteg 20 und Stableiter 10 jeweils eine quaderförmige Blockform. Der Anschlag bzw. die Ausbildung des Nullspaltes erfolgen hier als radialer (Fig. 19) bzw. axialer (Fig. 18) Stumpfstoß. Isolations- oder Haltescheiben können wie in vorhergehenden Ausführungsbeispielen vorgesehen sein. Eine elektrische Verbindung kann durch Schweißen hergestellt werden. Das Schweißen kann axial und/oder - insbesondere bei fehlender axialer Zugänglichkeit, wie beispielsweis aus Fig. 18b ersichtlich - auch schräg erfolgen. Denkbar und möglich ist auch das Durchschweißen des Verschaltungssteges 20 von axial oben mit einem geeigneten Verfahren wie beispielsweise Elektronenstrahlschweißen.

Figuren 20-22 zeigen jeweils schematisch einen Kontaktierungsprozess, der nicht der Erfindung entspricht, um Kontaktflächen 21, 11 von Verschaltungssteg 20 und Stableiter 10 in Anschlag zu bringen bzw. einen Nullspalt herzustellen in einer Schnittebene parallel zu und durch die Längsachse X des Stators. Hierbei erfolgt die Zustellung lateral, das heißt in einer Bewegungsrichtung senkrecht zur Statorlängsachse. Zu diesem Zweck sind die Verschaltungsstege 20 lateral verschieblich, vorzugsweise lose bzw. mit Spiel in Nuten von Isolationsscheiben (nicht dargestellt) gehalten. Das Spiel kann in x-Richtung, in y-Richtung oder einer Überlagerung der beiden Richtungen vorliegen, vgl. Koordinaten in Fig. 16c. Durch die laterale Verschieblichkeit können Toleranzketten reduziert werden, insbesondere können Toleranzketten/abhängigkeiten zwischen mehreren Verschaltungsstegen 20 aufgebrochen werden. Zur Herstellung des Flächenkontakts durch laterale Zubewegung werden nur die Verschaltungsstege durch beispielsweise einen Roboterarm einzeln oder durch eine mehrere Verschaltungsstege anfassende Greifvorrichtung en bloc nach radial innen bewegt.

Wie in Fig. 23 dargestellt, können die Verschaltungsstege 20 durch Noppen oder Halteelemente 32 in Nuten 31 von Isolationsscheiben 30 gehalten sein. Die Verschaltungsstege 20 können zum Einsetzen in die Nuten elastisch deformiert bzw. auf Biegung beansprucht sein. Die Noppen können durch ein Spritzgußverfahren ausgebildet sein. Die Noppen können auch durch ein Ultraschallverfahren ausgebildet sein. Insbesondere können die Noppen 31 erst nach Einsetzen der Verschaltungsstege 20 gebildet werden. Fig. 24 zeigt einen Befestigungsprozess, bei dem ein Verschaltungssteg durch Noppen 32 befestigt werden. Die Noppen werden durch ein Ultraschallwerkzeug bzw. Ultraschallstempel U durch Umformung aus dem Material der Isolationsscheibe erzeugt. Dadurch lassen sich Verschaltungsstege 20 insbesondere gegen Herausfallen aus den Nuten sichern.

Zusammenfassend kann anhand der vorliegenden Erfindung eine vereinfachte Herstellung eines Stators 1 bereitgestellt werden, der gleichzeitig einen reduzierten Bauraum aufweist.

Insbesondere ermöglicht eine Vorpositionierung und Kontaktierung anhand eines vorgespannten Flächenkontaktes der Stableiter 10 mit den Verschaltungsstegen 20 eine sichere elektrische Verbindung zur Erzeugung von zusammengesetzten Wicklungen. Es ist ein effizienter Zusammenbau des Stators 1 gewährleistet.

Indem die elektrische Kontaktierung in unterschiedlichen Ebenen bzw. Verschaltungsebenen erfolgt, kann eine bauraumeffiziente Anordnung erzielt werden. Darüber hinaus ist eine vorteilhafte Temperierung, insbesondere anhand von mit Kühlfluid durchströmbaren Isolationsscheiben 30 verfügbar.

### Bezugszeichenliste

- 1: Stator
- 2: Stirnbereich des Stators
- 3: Stirnbereich des Stators
- 4: Stator-Blechpaket
- 10: Stableiter
- 11: Stableiter-Kontaktfläche
- 20: Verschaltungssteg
- 21: Verschaltungssteg-Kontaktfläche
- 30: Isolationsscheibe
- 31: Nut
- 32: Haltelement
- 40: Deckelteil
- 50: Formlitze
- 60: Isolationsstern

- E: Elektroden (einer Widerstandsschweißvorrichtung)
- U: Ultraschallwerkzeug
- X: Rotationsachse

## Patentansprüche

1. Stator (1) für eine elektrische Maschine mit einer Vielzahl von Stableitern (10), die um eine Rotationsachse (X) des Stators (1) radial verteilt und jeweils voneinander beabstandet angeordnet sind, sodass sich die Stableiter (10) in Längsrichtung der Rotationsachse (X) erstrecken, und mit wenigstens einer Isolationsscheibe (30), die in einem Stirnbereich (2, 3) des Stators (1) angeordnet ist,
wobei die Isolationsscheibe (30), insbesondere ringförmig ausgebildete Isolationsscheibe (30),eine Vielzahl von Verschaltungsstegen (20) aufweist, wobei jeweils ein Verschaltungssteg (20) zwei Stableitern (10) zur Ausbildung einer elektrischen Verbindung zugeordnet ist,
wobei an längsseitigen Enden der Stableiter (10) jeweils eine Stableiter-Kontaktfläche (11) und an Enden der Verschaltungsstege (20) jeweils Verschaltungssteg-Kontaktflächen (21) ausgebildet sind,
wobei die Stableiter-Kontaktflächen (11) und die Verschaltungssteg-Kontaktflächen (21) jeweils korrespondierend zueinander ausgebildet sind, sodass ein Flächenkontakt bereitstellbar ist,
wobei die Verschaltungsstege (20) wenigstens entlang der Verschaltungssteg-Kontaktflächen (21) in radialer Richtung aus der Isolationsscheibe (30) herausragen, sodass mehrere Verschaltungssteg-Kontaktflächen (21) mit den jeweils zugeordneten Stableiter-Kontaktflächen (11) gleichzeitig kontaktierbar sind, wobei die Verschaltungsstege (20) und die Stableiter (10) eine federnde Verbindung ausbilden, zur Bereitstellung eines vorgespannten Flächenkontaktes zwischen den einander zugeordneten Stableiter-Kontaktflächen (11) und Verschaltungssteg-Kontaktflächen (21), **dadurch gekennzeichnet, dass** die längsseitigen Enden der Verschaltungsstege (20) in axialer Draufsicht keilförmig oder abgewinkelt ausgebildet sind, wobei abgewinkelt bedeutet, dass die Kontaktfläche des Verschaltungssteges mit der Tangentialen eines Kreises lotrecht zur Statorachse und um die Statorachse mit einem Radius derart, dass er durch die Kontaktfläche des Verschaltungssteges geht, einen Winkel von ungleich einem geradzahlig Vielfachen von 90° einschließt.

2. Stator (1) nach Anspruch 1,
**dadurch gekennzeichnet, dass**
die Stableiter-Kontaktflächen (11) und die jeweils zugeordneten Verschaltungssteg-Kontaktflächen (21) durch eine Rotation der Isolationsscheibe (30) entlang der Rotationsachse (X) des Stators (1) miteinander kontaktierbar sind.

3. Stator (1) nach Anspruch 1 oder 2,
**dadurch gekennzeichnet, dass**
die wenigstens eine Isolationsscheibe (30) eine Mehrzahl von Nuten (31) aufweist, zur Aufnahme der Verschaltungsstege (20), oder die Mehrzahl von Verschaltungsstegen (20) in der Isolationsscheibe (30) eingegossen ist.

4. Stator (1) nach Anspruch 3,
**dadurch gekennzeichnet, dass**
die Isolationsscheibe (30) ein Harz oder Polymer aufweist, insbesondere ein gießbares oder spritzbares Harz oder Polymer, zur Herstellung der Isolationsscheibe (30) in einem Gießverfahren.

5. Stator (1) nach einem der vorhergehenden Ansprüche,
**dadurch gekennzeichnet, dass**
die Verschaltungsstege (20) in Kontakt mit den Stableitern (10) entlang der Verschaltungssteg-Kontaktflächen (21) und der Stableiter-Kontaktflächen (11) jeweils einen Nullspalt ausbilden, sodass die Verschaltungsstege (20) mit den zugeordneten Stableitern (10) kraftschlüssig und/oder formschlüssig und /oder stoffschlüssig verbindbar sind, insbesondere mittels eines Strahlschweißverfahrens, eines Widerstandschweißverfahrens, eines Ultraschallschweißverfahrens oder eines Reibschweißverfahrens miteinander verschweißbar sind.

6. Stator (1) nach einem der vorhergehenden Ansprüche,
**dadurch gekennzeichnet, dass** über die Höhe der Stableiter-Kontaktflächen die Stableiter (10) im Querschnitt jeweils punktsymmetrisch, insbesondere in Form eines Parallelogramms, ausgebildet sind, sodass über den Querschnitt der Stableiter (10) identische Strompfadlängen vorliegen.

7. Elektrische Maschine mit einem Stator (1) nach einem der vorhergehenden Ansprüche.

8. Verfahren zur Herstellung eines Stators (1) oder einer elektrischen Maschine nach einem der vorhergehenden Ansprüche, die folgenden Schritte aufweisend:
- konzentrisches Ausrichten der Isolationsscheibe (30) gegenüber der Vielzahl von um die Rotationsachse (X) radial verteilt und jeweils voneinander beabstandet angeordneten Stableitern (10);
- Aufsetzen der Isolationsscheibe (30) an einem stirnseitigen Ende (2, 3) des Stators (1), sodass jeweils eine Stableiter-Kontaktfläche (11) und eine Verschaltungssteg-Kontaktfläche (21) einander entgegengerichtet sind;
- Rotieren der Isolationsscheibe (30) um die Rotationsachse (X), sodass ein vorgespannter Flächenkontakt zwischen den Stableiter-Kontaktflächen (11) und der Verschaltungssteg-Kontaktflächen (21) erzeugt wird.

9. Verfahren nach Anspruch 8,
**dadurch gekennzeichnet, dass**
die einander zugeordneten Stableiter (10) und Verschaltungsstege (20) entlang der jeweils miteinander in Kontakt stehenden Stableiter-Kontaktflächen (11) und Verschaltungssteg-Kontaktflächen (21) kraftschlüssig und/oder formschlüssig und/oder stoffschlüssig miteinander verbunden werden, insbesondere verschweißt werden.

10. Verfahren nach Anspruch 8 oder 9,
**dadurch gekennzeichnet, dass**
ein Deckelteil (40) auf die Isolationsscheibe (30) aufgesetzt wird.

11. Verfahren nach Anspruch 9 oder 10,
**dadurch gekennzeichnet, dass**
die Verschaltungsstege (20) mit den zugeordneten Stableitern (10) nach Positionierung des Deckelteils (40) kraftschlüssig und/oder formschlüssig und/oder stoffschlüssig verbunden werden.

## Claims

1. Stator (1) for an electrical machine having a plurality of rod conductors (10), which are distributed radially about an axis of rotation (X) of the stator (1) and are arranged spaced apart from one another in each case, so that the rod conductors (10) extend in the longitudinal direction of the axis of rotation (X), and having at least one insulation disk (30), which is arranged in an end face region (2, 3) of the stator (1),
wherein the insulation disk (30), in particular an annular insulation disk (30), has a plurality of interconnection pieces (20), in each case one interconnection piece (20) being assigned to two rod conductors (10) for forming an electrical connection,
wherein a rod contact surface (11) is formed at longitudinal ends of each rod conductor (10) and interconnection piece contact surfaces (21) are formed at ends of each interconnection piece (20),
wherein the rod contact surfaces (11) and the interconnection piece contact surfaces (21) are each formed to correspond to one another so as to enable a surface contact,
wherein the interconnection pieces (20) protrude in the radial direction from the insulation disk (30) at least along the interconnection piece contact surfaces (21), thereby enabling a plurality of interconnection piece contact surfaces (21) to be contacted simultaneously with the respectively associated rod conductor contact surfaces (11) wherein the interconnection pieces (20) and the rod conductors (10) form a resilient connection, for providing a preloaded surface contact between the mutually associated rod conductor contact surfaces (11) and interconnection piece contact surfaces (21), **characterized in that** the longitudinal ends of the interconnection pieces (20) are wedge-shaped in an axial plan view or angled, wherein angled means that the contact surface of the interconnection piece forms an angle with the tangent of a circle perpendicular to the stator axis and around the stator axis with a radius such that it passes through the contact surface of the interconnection piece, wherein the angle is not equal to an even multiple of 90°.

2. Stator (1) according to claim 1, **characterized in that** the rod conductor contact surfaces (11) and the respectively associated interconnection piece contact surfaces (21) are configured to be contacted with one another by rotating the insulation disk (30) along the axis of rotation (X) of the stator (1).

3. Stator (1) according to claims 1 or 2, **characterized in that** the at least one insulation disk (30) has a plurality of grooves (31) for receiving the interconnection pieces (20), or the plurality of interconnection pieces (20) is integrally cast in the insulation disk (30).

4. Stator (1) according to claim 3, **characterized in that** the insulation disk (30) comprises a resin or polymer, in particular a castable or injectable resin or polymer, for producing the insulation disk (30) in a casting process.

5. Stator (1) according to one of the preceding claims, **characterized in that** the interconnection pieces (20) that are in contact with the rod conductors (10) form a zero gap along the interconnection piece contact surfaces (21) and the rod conductor contact surfaces (11) in each case, thereby enabling the interconnection pieces (20) to be connected to the associated rod conductors (10) in a force-locking and/or form-locking and/or material-locking manner, in particular by means of a beam welding process, a resistance welding process, an ultrasonic welding process or a friction welding process.

6. Stator (1) according to one of the preceding claims, **characterized in that**, across the height of the rod conductor contact surfaces, the rod conductors (10) are each designed to be point-symmetrical in cross section, in particular in the form of a parallelogram, thereby enabling identical current path lengths to be present across the cross section of the rod conductors (10).

7. Electrical machine with a stator (1) according to one of the preceding claims.

8. Method of manufacturing a stator (1) or an electric machine according to any one of the preceding claims, comprising the following steps:
- concentrically aligning the insulation disk (30) with respect to the plurality of rod conductors (10) radially distributed around the axis of rotation (X) and spaced apart from each other, respectively;
- placing the insulation disk (30) on a front end face (2, 3) of the stator (1) so that a rod conductor contact surface (11) and an interconnection piece contact surface (21) are each opposite to each other;
- rotating the insulation disk (30) about the axis of rotation (X) so as to establish a preloaded surface contact between the rod conductor contact surfaces (11) and the interconnection piece contact surfaces (21).

9. Method according to claim 8, **characterized in that** the rod conductors (10) and interconnection pieces (20) assigned to one another are connected to one another, in particular welded, along the rod conductor contact surfaces (11) and interconnection piece contact surfaces (21) that are in contact with one another in a force-locking and/or form-locking and/or material-locking manner.

10. Method according to claims 8 or 9, **characterized in that** a cover part (40) is placed on the insulation disk (30).

11. Method according to claims 9 or 10, **characterized in that** the interconnection pieces (20) are connected to the associated rod conductors (10) in a force-locking and/or form-locking and/or material-locking manner after positioning of the cover part (40).

## Revendications

1. Stator (1) pour une machine électrique comprenant une pluralité de barres conductrices (10) qui sont réparties radialement autour d'un axe de rotation (X) du stator (1) et agencées respectivement à distance les unes des autres, de sorte que les barres conductrices (10) s'étendent dans la direction longitudinale de l'axe de rotation (X), et au moins une disque isolant (30) qui est agencé dans une zone frontale (2, 3) du stator (1),
dans lequel le disque isolant (30), en particulier le disque isolant (30) réalisé de forme annulaire, présente une pluralité de passerelles de raccordement (20), dans lequel une passerelle de raccordement (20) est associée à deux barres conductrices (10) pour former une connexion électrique,
dans lequel une surface de contact de barre conductrice (11) est formée aux extrémités longitudinales des barres conductrices (10) et des surfaces de contact de passerelle de raccordement (21) sont formées aux extrémités des passerelles de raccordement (20),
dans lequel les surfaces de contact de barre conductrice (11) et les surfaces de contact de passerelle de raccordement (21) sont respectivement conçues de manière à correspondre les unes aux autres, de sorte qu'un contact de surface puisse être fourni, dans lequel les passerelles de raccordement (20) font saillie à partir du disque isolant (30) au moins le long des surfaces de contact de passerelle de raccordement (21) dans la direction radiale, de sorte que plusieurs surfaces de contact de passerelle de raccordement (21) peuvent être mises en contact simultanément avec les surfaces de contact de barre conductrice respectives associées (11), dans lequel les passerelles de raccordement (20) et les barrettes conductrices (10) forment une connexion à ressort pour fournir un contact de surface précontraint entre les surfaces de contact de barrette conductrices (11) et les surfaces de contact de passerelle de raccordement (21) associées les unes aux autres, **caractérisé en ce que** les extrémités longitudinales des passerelles de raccordement (20) sont réalisées en forme de coin ou coudées en vue de dessus axiale, dans lequel coudées signifie que la surface de contact de la passerelle de raccordement forme un angle d'un multiple non pair de 90°avec les tangentes d'un cercle perpendiculaire à l'axe de stator et autour de l'axe de stator avec un rayon, de telle sorte qu'elle traverse la surface de contact de la passerelle de raccordement.

2. Stator (1) selon la revendication 1,
**caractérisé en ce que**
les surfaces de contact de barre conductrice (11) et les surfaces de contact de passerelle de raccordement (21) associées respectives peuvent être mises en contact les unes avec les autres par une rotation du disque isolant (30) le long de l'axe de rotation (X) du stator (1).

3. Stator (1) selon la revendication 1 ou 2,
**caractérisé en ce que**
le au moins un disque isolant (30) présente une pluralité de rainures (31) pour recevoir les passerelles de raccordement (20), ou la pluralité de passerelles de raccordement (20) sont coulées dans le disque isolant (30).

4. Stator (1) selon la revendication 3,
**caractérisé en ce que**
le disque isolant (30) présente une résine ou un polymère, en particulier une résine ou un polymère pouvant être coulé(e) ou injecté(e), pour la fabrication du disque isolant (30) dans un procédé de coulée.

5. Stator (1) selon l'une quelconque des revendications précédentes,
**caractérisé en ce que**
les passerelles de raccordement (20) en contact avec les barres conductrices (10) le long des surfaces de contact de passerelle de raccordement (21) et des surfaces de contact de barre conductrice (11) forment chacune une fente nulle, de sorte que les passerelles de raccordement (20) peuvent être reliées aux barres conductrices (10) associées par liaison de force et/ou par liaison de forme et /ou par liaison de matière, en particulier au moyen d'un procédé de soudage par faisceau, d'un procédé de soudage par résistance, d'un procédé de soudage par ultrasons ou d'un procédé de soudage par friction.

6. Stator (1) selon l'une quelconque des revendications précédentes,
**caractérisé en ce que** par la hauteur des surfaces de contact de barre conductrice, la section transversale des barres conductrices (10) est conçue de manière à présenter une symétrie ponctuelle, en particulier sous la forme d'un parallélogramme, de sorte que des longueurs de trajet de courant identiques existent sur la section transversale des barres conductrices (10).

7. Machine électrique comprenant un stator (1) selon l'une quelconque des revendications précédentes.

8. Procédé de fabrication d'un stator (1) ou d'une machine électrique selon l'une quelconque des revendications précédentes, comprenant les étapes suivantes consistant à :
- orienter de manière concentrique le disque isolant (30) par rapport à la pluralité de barres conductrices (10) réparties radialement autour de l'axe de rotation (X) et agencées espacées les unes des autres ;
- mettre en place le disque isolant (30) sur une extrémité frontale (2, 3) du stator (1), de sorte qu'une surface de contact de barre conductrice (11) et une surface de contact de passerelle de raccordement (21) soient opposées l'une à l'autre ;
- faire tourner le disque isolant (30) autour de l'axe de rotation (X), de sorte qu'un contact de surface précontraint entre les surfaces de contact de barre conductrice (11) et les surfaces de contact de passerelle de raccordement (21) soit généré.

9. Procédé selon la revendication 8,
**caractérisé en ce que**
les barres conductrices (10) et les passerelles de raccordement (20) associés les unes aux autres le long des surfaces de contact de barre conductrice (11) et des surfaces de contact de passerelle de raccordement (21) respectivement en contact les unes avec les autres sont reliées les unes aux autres par complémentarité de force et/ou par complémentarité de forme et/ou par complémentarité de matière, en particulier par soudage.

10. Procédé selon la revendication 8 ou 9,
**caractérisé en ce que**
une partie de couvercle (40) est mise en place sur le disque isolant (30).

11. Procédé selon la revendication 9 ou 10,
**caractérisé en ce que**
après le positionnement de la partie de couvercle (40), les passerelles de raccordement (20) sont reliées aux barres conductrices associées (10) par liaison de force et/ou par liaison de forme et/ou par liaison de matière.
